# EUROPEAN PATENT SPECIFICATION

(11) **EP 4 092 797 B1**
(45) Date of publication and mention of the grant of the patent: **08.07.2026**
(21) Application number: 21756462.4
(22) Date of filing: 18.02.2021
(51) Int. Cl.: H01M 10/0565, H01M 10/0564, H01M 50/411, H01M 50/449, H01M 10/052, H01M 50/44, H01M 50/443, H01M 50/46, H01M 50/403, H01M 50/414

(54) **LITHIUM SECONDARY BATTERY AND METHOD OF MANUFACTURING SAME**
LITHIUMSEKUNDÄRBATTERIE UND VERFAHREN ZUR HERSTELLUNG DAVON
BATTERIE SECONDAIRE AU LITHIUM ET SON PROCÉDÉ DE FABRICATION

(30) Priority: 18.02.2020 KR 20200019877
(43) Date of publication of application: 23.11.2022
(73) Proprietor: LG Energy Solution, Ltd., Seoul 07335 (KR)
(72) Inventor: LEE, Jung-Pil, Daejeon 34122 (KR); LEE, Suk-Woo, Daejeon 34122 (KR)
(74) Representative: Goddar, Heinz J.
(86) International application number: PCT/KR2021/002086
(87) International publication number: WO 2021/167381

(56) References cited:
- EP-A1- 3 958 366
- KR-A- 19980 078 120
- KR-A- 20150 039 255
- KR-A- 20160 013 631
- KR-A- 20190 043 163
- KR-A- 20190 079 171
- US-A1- 2015 034 249
- US-A1- 2015 162 587
- ESPINAL LAURA: "Characterization of Materials, Second Edition", 12 October 2012 (2012-10-12), pages 1 - 9, XP055832126, Retrieved from the Internet <URL:https://doi.org/10.1002/0471266965.com129>
- R BRDICKA ET AL: "Surface area and pore size determination Modern Methods in Heterogeneous Catalysis Research", HANDBOOK OF HETEROGENEOUS CATALYSIS, VCH, WEINHEIM HANDBOOK OF POROUS SOLIDS, 1 January 2004 (2004-01-01), XP055643749, Retrieved from the Internet <URL:http://www.fhi-berlin.mpg.de/acnew/department/pages/teaching/pages/teaching__wintersemester__2013_2014/annette_trunschke__surface_area_and_pore_analysis__131101.pdf>
- EUNICE K WONG ET AL: "Battery Separator Characterization and Evaluation Procedures for NASA's Advanced Lithium-Ion Batteries", 1 May 2010 (2010-05-01), XP055608606, Retrieved from the Internet <URL:https://ntrs.nasa.gov/archive/nasa/casi.ntrs.nasa.gov/20100021170.pdf>

## Description

### TECHNICAL FIELD

The present application claims priority to Korean Patent Application No. 10-2020-0019877 filed on February 18, 2020 in the Republic of Korea. The present disclosure relates to a lithium secondary battery including a solid-liquid hybrid electrolyte membrane and a method for manufacturing the same.

### BACKGROUND ART

Importance of lithium secondary batteries has been increased, as use of vehicles, computers and portable terminals has been increased. Particularly, there is a high need for development of lithium secondary batteries having a low weight and providing high energy density.

The lithium secondary battery can be obtained by interposing a separator between a positive electrode and a negative electrode and injecting a liquid electrolyte thereto, or by interposing a solid electrolyte membrane between a positive electrode and a negative electrode.

However, in the case of a lithium ion battery using a liquid electrolyte, the negative electrode and the positive electrode are divided from each other by the separator. Therefore, when the separator is damaged by deformation or external impact, a short-circuit may occur, resulting in a risk, such as overheating or explosion.

A lithium secondary battery using a solid electrolyte is advantageous in that it has enhanced safety and prevents leakage of an electrolyte to improve the reliability of the battery and to allow easy manufacture of a thin battery. However, even though a solid electrolyte is used, there is still a need for development of a solid electrolyte membrane having high energy density and improved processability. In addition, in the case of a solid electrolyte, it has low ion conductivity to cause the problem of degradation of performance and shows insufficient mechanical strength. Therefore, there is a need for overcoming the above-mentioned problems.

US 2015/0034249 A1 discloses an apparatus for preparing an electrode assembly, comprising a printing unit including a charging mean for bringing polymer particles into electric charging to obtain electrically charged polymer particles, and a transferring mean for coating the electrically charged polymer particles by way of transferring on at least one surface of a substrate for an electrochemical device to form an adhesive layer on the substrate, the substrate being at least one of a cathode, an anode and a separator; and a laminating unit that applies heat and pressure to the substrate having the adhesive layer formed thereon so as to obtain the electrode assembly comprising the cathode, the anode and the separator interposed therebetween.

### DISCLOSURE

### Technical Problem

The present disclosure is designed to solve the problems of the related art, and therefore the present disclosure is directed to providing a lithium secondary battery including a solid-liquid hybrid electrolyte membrane which has a reduced thickness as compared to commercially available solid electrolyte membranes, while ensuring ion conductivity.

The present disclosure is also directed to providing a lithium secondary battery including a solid-liquid hybrid electrolyte membrane which has improved mechanical strength, even though it is a thinner film as compared to commercially available solid electrolyte membranes.

In addition, the present disclosure is directed to providing a lithium secondary battery including a solid-liquid hybrid electrolyte membrane which can be formed into a thinner film as compared to the commercially available solid electrolyte membranes and has improved energy density per weight based on the thickness.

These and other objects and advantages of the present disclosure may be understood from the following detailed description. Also, it will be easily understood that the objects and advantages of the present disclosure may be realized by the means shown in the appended claims and combinations thereof.

### Technical Solution

The above problems are solved in accordance with the independent claims. Further embodiments result from the sub-claims and the following description.

In one aspect of the present disclosure, there is provided a lithium secondary battery according to any one of the following embodiments.

Particularly, there is provided a lithium secondary battery manufactured according to the method set forth below which includes a first electrode and a second electrode having a polarity opposite to each other, and a solid-liquid hybrid electrolyte membrane interposed between the first electrode and the second electrode,
wherein the solid-liquid hybrid electrolyte membrane includes a non-woven web substrate layer and a porous structural layer formed on at least one surface of the non-woven web substrate, and the non-woven web substrate layer has a microporous structure formed by a microstructure of polymer fibrils, and solid polymer particles are dispersed in the microporous structure and a liquid electrolyte is incorporated into the microporous structure;
the solid polymer particles are packed in the porous structural layer, while being in contact with one another, a pore structure is formed between the solid polymer particles, and the liquid electrolyte surrounds the portions in which the solid polymer particles are in surface contact with one another, or the surfaces of the solid polymer particles;
the content of the liquid electrolyte is 50-70 wt% based on 100 wt% of the total weight of the solid polymer particles and the liquid electrolyte;
the solid-liquid hybrid electrolyte membrane has an ion conductivity of 1x10⁻⁵ to 1x10⁻¹ S/cm
wherein the solid polymer particle comprises any one selected from the group consisting of polyphenylene oxide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more selected therefrom.

Herein, the polymer fibrils may have an average diameter of 0.005-5 µm, and the non-woven web substrate may have pores having a diameter of 0.05-30 µm and a porosity of 50-80% as determined by using porosimetry.

Herein, the polymer fibrils may include any one selected from the group consisting of polyolefin, polyethylene terephthalate (PET), polyethylene naphthalene (PEN), polyester, nylon, polyimide, polybenzoxazole, polytetrafluoroethylene, polyarylene ether sulfone, polyether ether ketone and copolymers thereof, or a mixture of two or more selected therefrom.

The solid polymer particle may be an engineering plastic resin.

The non-woven web substrate layer may have a thickness of 5-100 µm, and the porous structural layer may have a thickness of 5-500 µm.

The first electrode and the second electrode may include a solid electrolyte, and the solid-liquid hybrid electrolyte membrane may have a thickness of 10-50 µm.

The solid-liquid hybrid electrolyte membrane may have a mechanical strength of 49033.3 to 490332.5 kPa (500-5,000 kgf/cm²).

The solid-liquid hybrid electrolyte membrane may have a thickness of 5-500 µm.

The lithium secondary battery may be a lithium ion secondary battery or a solid-state battery.

Each of the first electrode and the second electrode may independently include a solid electrolyte or may include no solid electrolyte.

The porous structural layer may be directly coated and formed independently and directly on each of the first electrode and the second electrode.

In another aspect of the present disclosure, there is provided a method for manufacturing a lithium secondary battery according to any one of the following embodiments.

Particularly, there is provided a method for manufacturing a lithium secondary battery which includes a first electrode and a second electrode having a polarity opposite to each other, and a solid-liquid hybrid electrolyte membrane interposed between the first electrode and the second electrode, the method including the steps of:
(S1) preparing a dispersion containing solid polymer particles and a liquid electrolyte;
(S2) applying the dispersion onto the first electrode to form a porous structural layer; and
(S3) stacking a non-woven web substrate and the second electrode having a polarity opposite to the polarity of the first electrode, successively, on the porous structural layer, and carrying out pressurization to obtain a solid-liquid hybrid electrolyte including the non-woven web substrate layer, wherein the content of the liquid electrolyte is 50-70 wt% based on 100 wt% of the total weight of the solid-liquid hybrid electrolyte membrane
wherein the solid polymer particle comprises any one selected from the group consisting of polyphenylene oxide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more selected therefrom.

The first electrode may be a positive electrode and the second electrode may be a negative electrode, or the first electrode may be a negative electrode and the second electrode may be a positive electrode.

The non-woven web substrate layer may have a microporous structure formed by a microstructure of polymer fibrils, solid polymer particles may be dispersed in the microporous structure and a liquid electrolyte may be incorporated into the microporous structure, the solid polymer particles may be packed in the porous structural layer, while being in contact with one another, a pore structure may be formed between the solid polymer particles, and the liquid electrolyte may surround the portions in which the solid polymer particles are in surface contact with one another, or the surfaces of the solid polymer particles.

The non-woven web substrate layer may include any one selected from the group consisting of polyolefin, polyethylene terephthalate (PET), polyethylene naphthalene (PEN), polyester, nylon, polyimide, polybenzoxazole, polytetrafluoroethylene, polyarylene ether sulfone, polyether ether ketone and copolymers thereof, or a mixture of two or more selected therefrom.

The solid polymer particle may be an engineering plastic resin.

The liquid electrolyte may be a salt having a structure of A⁺B⁻, wherein A⁺ includes an alkali metal cation or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof.

The lithium secondary battery may be a lithium ion secondary battery or a solid-state battery.

Each of the first electrode and the second electrode may independently include a solid electrolyte or may include no solid electrolyte.

### Advantageous Effects

According to an embodiment of the present disclosure, it is possible to obtain a lithium secondary battery including a deformable solid-liquid hybrid electrolyte membrane by using solid polymer particles instead of inorganic particles.

In addition, since a particle-shaped polymer capable of being compressed is used, it is possible to provide a lithium secondary battery including a solid-liquid hybrid electrolyte membrane having improved mechanical strength. Since no solid electrolyte is used, it is possible to provide a solid-liquid hybrid electrolyte membrane which can be deformed by external pressurization. Further, the polymer particles are bound physically with one another, which is favorable to porosity and pore channel formation.

According to an embodiment of the present disclosure, since no binder polymer is used, it is possible to provide a solid-liquid hybrid electrolyte membrane showing low resistance.

Further, it is possible to provide a lithium secondary battery including a solid-liquid electrolyte membrane which includes a predetermined amount of liquid electrolyte to show high ion conductivity, uses a non-woven web substrate to provide high mechanical strength, and has improved ion conductivity by virtue of the non-woven web substrate impregnated with the liquid electrolyte.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic view illustrating the solid-liquid hybrid electrolyte membrane according to an embodiment of the present disclosure.
FIG. 2 is a schematic view illustrating the structure of a solid-state battery including the solid-liquid hybrid electrolyte membrane according to an embodiment of the present disclosure.
FIGS. 3a-3c are schematic views illustrating the method for manufacturing a lithium secondary battery including the solid-liquid hybrid electrolyte membrane according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes or comprises an element' does not preclude the presence of any additional elements but means that the part may further include the other elements, unless otherwise stated.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Specific terms used in the following description are for illustrative purposes and are not limiting. Such terms as 'right', 'left', 'top surface' and 'bottom surface' show the directions in the drawings to which they are referred. Such terms as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

The present disclosure relates to a lithium secondary battery including a solid-liquid hybrid electrolyte membrane and a method for manufacturing the same.

Particularly, in one aspect of the present disclosure, there is provided a lithium secondary battery which includes a first electrode and a second electrode having a polarity opposite to each other, and a solid-liquid hybrid electrolyte membrane interposed between the first electrode and the second electrode, wherein the solid-liquid hybrid electrolyte membrane includes a non-woven web substrate layer and a porous structural layer, and contains a predetermined amount of liquid electrolyte.

Herein, the non-woven web substrate layer has a microporous structure formed by a microstructure of polymer fibrils, and solid polymer particles are dispersed in the microporous structure or a liquid electrolyte is incorporated into the microporous structure,
the solid polymer particles are packed in the porous structural layer, while being in contact with one another, a pore structure is formed between the solid polymer particles, and the liquid electrolyte surrounds the portions in which the solid polymer particles are in surface contact with one another, or the surfaces of the solid polymer particles, and
the content of the liquid electrolyte is 50-70 wt% based on 100 wt% of the total weight of the solid polymer particles and the liquid electrolyte.

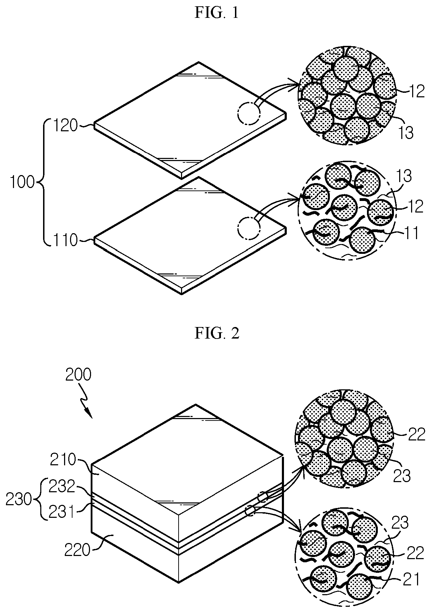

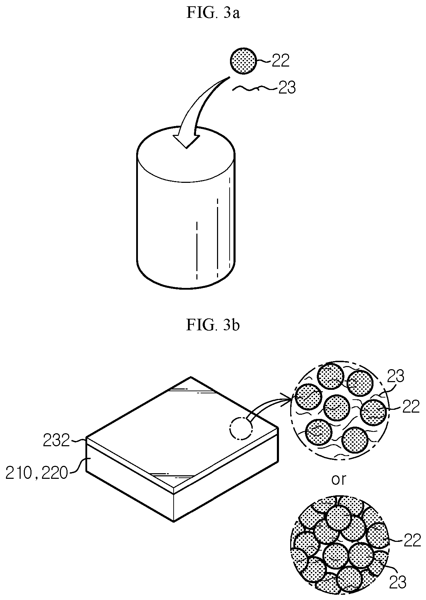

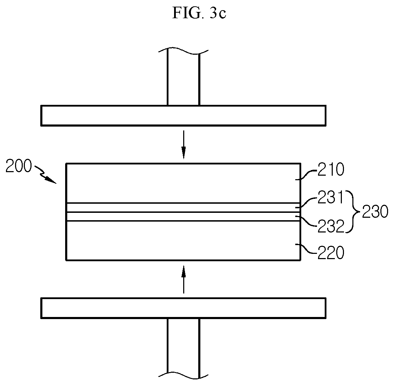

FIG. 1 is a schematic view illustrating the solid-liquid hybrid electrolyte membrane according to an embodiment of the present disclosure. FIG. 2 is a schematic view illustrating the structure of a solid-state battery including the solid-liquid hybrid electrolyte membrane according to an embodiment of the present disclosure. FIGS. 3a-3c are schematic views illustrating the method for manufacturing a lithium secondary battery including the solid-liquid hybrid electrolyte membrane according to an embodiment of the present disclosure. Hereinafter, the present disclosure will be explained in more detail with reference to the accompanying drawings.

Referring to FIG. 1, the solid-liquid hybrid electrolyte membrane 100 according to an embodiment of the present disclosure includes a nonwoven web substrate layer 110 and a porous structural layer 120.

The nonwoven web substrate layer 110 includes a nonwoven web substrate having a pore structure formed by a microstructure of polymer fibrils.

Herein, the solid polymer particles are dispersed in the microporous structure or the liquid electrolyte is incorporated into the microporous structure. In other words, the polymer fibrils may be entangled with the solid polymer particles, and the surfaces of the polymer fibrils and/or the surfaces of the solid polymer particles may be coated with the liquid electrolyte.

As used herein, 'polymer fibril' means a structure formed by the polymer chains forming the nonwoven web substrate layer, elongated and aligned in the longitudinal direction during the fabrication of the nonwoven web, so that the binding force between the adjacent molecular chains may be increased and the molecular chains may be assembled in the longitudinal direction.

The nonwoven web substrate layer may include a plurality of polymer fibrils arranged regularly or irregularly and stacked in a layered shape.

Therefore, according to an embodiment of the present disclosure, the solid-liquid hybrid electrolyte membrane includes a nonwoven web substrate layer, wherein the nonwoven web substrate layer includes solid polymer particles or a liquid electrolyte, and thus provides increased mechanical strength and improved ion conductivity.

Herein, the polymer fibrils may include any one selected from polyolefin, polyethylene terephthalate (PET), polyethylene naphthalene (PEN), polyester, nylon, polyimide, polybenzoxazole, polytetrafluoroethylene, polyarylene ether sulfone, polyether ether ketone and copolymers thereof, or a mixture of two or more selected therefrom, but are not limited thereto.

Herein, particular examples of polyolefin may include: polyethylene, such as low-density polyethylene including polyethylene prepared by copolymerization of ethylene with at least one C3-C12 alpha-olefin, high-density polyethylene or linear low-density polyethylene; and polypropylene, such as isotactic polypropylene, atactic polypropylene or syndiotactic polypropylene, but are not limited thereto. Polyolefin is a material used widely for manufacturing a substrate for a separator of a secondary battery.

Since the solid polymer particles are dispersed in the pores formed by the polymer fibrils, it is possible to increase the mechanical strength as compared to the polymer fibrils themselves or the solid electrolyte alone. In addition, since the liquid electrolyte is incorporated into the microporous structure formed by the microstructure of the polymer fibrils, it is possible to increase the ion conductivity, while minimizing adverse effects, such as an increase in resistance.

The polymer fibrils may have an average diameter of 0.005-5 µm. Within the above-defined range, it is possible to control the porosity and thickness of the nonwoven web substrate layer with ease, while not causing degradation of the mechanical strength of the nonwoven web substrate layer.

The nonwoven web substrate formed by the polymer fibrils may have pores having an average diameter of 0.05-100 µm. When the nonwoven web substrate in the nonwoven web substrate layer satisfies the above-defined range of pore diameter, it is possible to obtain a desired level of ion conductivity and mechanical strength, even when the nonwoven web substrate is used for a solid-liquid hybrid electrolyte membrane.

In a variant, the microporous structure in the nonwoven web substrate may have a pore size corresponding to 0.2-100 times, 0.5-80 times, or 1-50 times of the average diameter (D₅₀) of the particle-shaped solid polymer particles. Within the above-defined range, the solid polymer particles may be bound easily to the pores of the nonwoven web, and a possibility of short-circuit generation after forming an electrode assembly may be reduced.

In addition, the nonwoven web substrate may have a porosity of 40-95%. Unless otherwise stated, the porosity percentage refers to vol%. When the nonwoven web substrate satisfies the above-defined range of porosity, it is possible to obtain a desired level of ion conductivity, mechanical strength and shape stability, even when the nonwoven web substrate is used for a solid-liquid hybrid electrolyte membrane.

As used herein, the term 'pore' may have various types of pore structures, and any type of pore having an average pore size satisfying the above-defined average pore size, as determined by using porosimetry or as observed through field-emission scanning electron microscopy (FE-SEM), falls within the scope of the present disclosure.

According to an embodiment of the present disclosure, the nonwoven web substrate layer may have a thickness of 5-100 µm, 8-75 µm, or 10-50 µm. According to an embodiment of the present disclosure, a nonwoven web substrate layer having a thickness of 15-40 µm is used, which is advantageous in terms of ensuring strength and ion conductivity.

In the porous structural layer 120, the solid polymer particles 12 are packed, while being in contact with one another, and a pore structure is formed between the solid polymer particles.

Herein, the solid polymer particles may be in contact with one another by being packed under external pressure. For example, the external pressure may be monoaxial pressurization, roll pressing, cold isostatic press (CIP), hot isostatic press (HIP), or the like. However, the scope of the present disclosure is not limited thereto, and any physical or chemical process capable of adhering the solid polymer particles with one another may be used.

Herein, the solid polymer particles may undergo plastic deformation beyond the physical elastic region of the particles by the above-mentioned external pressure, and thus have an increased contact surface between particles as compared to the particles before applying the pressure or undergo a change in volume to generate a new contact surface, or the adhesion of the adhesion surface between particles is increased due to the plastic deformation to form a desired structure. For example, the solid polymer particles may be pelletized.

The solid polymer particle is present in a solid state at room temperature, and is a polymer material having low solubility to the electrolyte. According to the present disclosure, the solid polymer particles are surrounded with the liquid electrolyte, and preferably have low solubility to the liquid electrolyte. In addition, the solid polymer particle is a polymer having excellent chemical resistance, preferably.

Particularly, the solid polymer particles have a solubility of less than 30%, when being impregnated with a liquid electrolyte, such as ethylene carbonate : ethyl methyl carbonate = 30 : 70 (vol%). More particularly, the solid polymer particles may have a solubility of less than 20%, less than 15%, or less than 10%. Therefore, the solid polymer particles may be present in a solid state, even when they are dispersed in a solvent.

Particularly, the solid polymer particle may be an engineering plastic resin.

Herein, the engineering plastic resin includes any one selected from polyphenylene sulfide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more selected therefrom. In addition, the engineering plastic resin may have a molecular weight of 100,000-10,000,000 Da.

The solid polymer particles have compressibility, unlike the conventional commercially available inorganic particles. Therefore, it is possible to provide a lithium secondary battery having increased energy density per weight based on the thickness. In addition, it is possible to provide a deformable solid-liquid hybrid electrolyte membrane by using solid polymer particles instead of the conventional solid electrolyte. The solid polymer particles have ductility, and thus can be interconnected physically or chemically under pressurization or heating. As a result, the solid-liquid hybrid electrolyte membrane according to the present disclosure requires no separate binder polymer. In other words, the solid-liquid hybrid electrolyte membrane is free of a binder polymer. Therefore, it is possible to provide a solid-liquid hybrid electrolyte membrane showing reduced resistance.

According to an embodiment of the present disclosure, the solid polymer particles may have an average particle diameter of 100 nm to 10 µm, 200 nm to 5 µm, or 500 nm to 2 µm. When the solid polymer particles have a particle diameter controlled within the above-defined range, it is possible to obtain a suitable pore size, to prevent a short-circuit, and to allow sufficient impregnation with the liquid electrolyte.

According to an embodiment of the present disclosure, the liquid electrolyte 13 is present in a predetermined amount, and lithium ions can be transported through the liquid electrolyte. In other words, according to an embodiment of the present disclosure, it is possible to provide a lithium secondary battery including a solid-liquid hybrid electrolyte membrane having high ion conductivity even in the absence of the use of a solid electrolyte.

The liquid electrolyte is present in the portions in which the solid polymer particles are in surface contact with one another, or surrounds the surfaces of the solid polymer particles. In other words, the surfaces of the solid polymer particles may be coated with the liquid electrolyte. Since the liquid electrolyte is present as mentioned above, it is possible to provide a solid-liquid hybrid electrolyte membrane having high ion conductivity.

The content of the liquid electrolyte is 50-70 wt% based on 100 wt% of the total weight of the solid polymer particles and the liquid electrolyte. Particularly, the content of the liquid electrolyte may be 50 wt% or more, 55 wt% or more, or 60 wt% or more, based on the total weight of the solid polymer particles and the liquid electrolyte. In addition, the content of the liquid electrolyte may be 70 wt% or less, 68 wt% or less, or 65 wt% or less, based on the total weight of the solid polymer particles and the liquid electrolyte. Since such a high content of liquid electrolyte is used, it is possible to improve the ion conductivity of the solid-liquid hybrid electrolyte membrane.

According to an embodiment of the present disclosure, the solid-liquid hybrid electrolyte membrane has high ion conductivity. This is because the liquid electrolyte is dispersed homogeneously on the surfaces of the solid polymer particles or the portions in which the solid polymer particles are in surface contact with one another. According to an embodiment of the present disclosure, dip coating, spray coating, doctor blade coating or drop coating may be used to carry out such homogeneous impregnation with the liquid electrolyte.

According to an embodiment of the present disclosure, the liquid electrolyte cannot dissolve the solid polymer particles and has excellent chemical resistance and electrochemical resistance.

For example, the liquid electrolyte is a salt having a structure of A⁺B⁻, wherein A⁺ includes an alkali metal cation such as Li⁺, Na⁺, K⁺ or a combination thereof, and B⁻includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, wherein the salt may be dissolved or dissociated in an organic solvent, such as an ether-based solvent, a carbonate-based solvent, a nitrile-based solvent, or the like, but is not limited thereto.

For example, the ether-based organic solvent may include dimethyl ether, diethyl ether, dipropyl ether, methyl ethyl ether, methyl propyl ether, ethyl propyl ether, 1,2-dimethoxyethane, or a mixture of two or more selected therefrom.

For example, the carbonate-based organic solvent may include propylene carbonate (PC), ethylene carbonate (EC), diethyl carbonate (DEC), dimethyl carbonate (DMC), dipropyl carbonate (DPC), ethyl methyl carbonate (EMC), or a mixture of two or more selected therefrom.

For example, the nitrile-based organic solvent may include acetonitrile, succinonitrile, or a mixture of two or more selected therefrom.

In addition to the above-listed solvents, the organic solvent may include dimethyl sulfoxide, dimethoxyethane, diethoxyethane, tetrahydrofuran, N-methyl-2-pyrrolidone (NMP), gamma-butyrolactone (γ-butyrolactone) or a mixture thereof, but is not limited thereto.

According to an embodiment of the present disclosure, the ion conductivity of the solid-liquid hybrid electrolyte membrane is higher than the ion conductivity of the porous structural layer itself, and may have an ion conductivity of 1x10⁻⁵ to 1x10⁻¹ S/cm, 1x10⁻⁴ to 1x10⁻² S/cm, or 1x10⁻⁴ to 5x10⁻³ S/cm.

As described above, even though the solid-liquid hybrid electrolyte membrane according to an embodiment of the present disclosure has a lower porosity as compared to the porous structural layer, it shows a higher ion conductivity as compared to the porous structural layer itself.

According to an embodiment of the present disclosure, the porous structural layer may be formed independently and directly on the first electrode and the second electrode.

Herein, the method for forming a porous structural layer is not particularly limited, and any method used conventionally in the art may be used.

For example, a dispersion containing solid polymer particles and a liquid electrolyte may be applied onto the first electrode or the second electrode.

According to an embodiment of the present disclosure, when the solid polymer particles are present in such a manner that the liquid electrolyte may surround the solid polymer particles, it is possible to provide the solid-liquid hybrid electrolyte membrane in a finished lithium secondary battery with increased ion conductivity.

Herein, the dispersion may be overcoated on the first electrode or the second electrode to form a porous structural layer, and then a nonwoven web substrate may be stacked thereon to form a nonwoven web substrate layer including polymer fibrils impregnated with the solid polymer particles and/or the liquid electrolyte.

According to an embodiment of the present disclosure, the porosity and pore size of the porous structural layer itself and the electrolyte membrane according to the present disclosure may be controlled by adjusting the average particle diameter of the solid polymer particles or the pressurization condition during the manufacture. For example, the porosity and pore size may be controlled by adjusting the roll gap of a roll press, controlling the temperature during the manufacture, or controlling the content or particle diameter of the solid polymer particles.

According to an embodiment of the present disclosure, the porous structural layer may have a thickness of 5-500 µm, 20-300 µm, or 30-100 µm. Since a thin film-type porous structural layer having a thickness of 10-50 µm is used according to an embodiment of the present disclosure, the battery obtained subsequently may have improved energy density advantageously.

According to an embodiment of the present disclosure, the solid-liquid hybrid electrolyte membrane may have a thickness of 5-500 µm, 20-300 µm, or 30-100 µm. Since a thin film-type solid-liquid hybrid electrolyte membrane having a thickness of 10-50 µm is provided according to an embodiment of the present disclosure, the battery obtained subsequently may have improved energy density advantageously.

According to an embodiment of the present disclosure, the solid-liquid hybrid electrolyte membrane may have aa tensile strength of 49033.3 to 490332.5 kPa (500-5,000 kgf/cm²), 68646.6 to 294199.5 kPa (700-3,000 kgf/cm²), or 98066.5 to 196133 kPa (1,000-2,000 kgf/cm²).

According to an embodiment of the present disclosure, the lithium secondary battery may be a lithium ion battery or a solid-state battery.

Particularly, each of the first electrode and the second electrode may independently include a solid electrolyte or may include no solid electrolyte.

Herein, the first electrode may be a positive electrode and the second electrode may be a negative electrode, or the first electrode may be a negative electrode and the second electrode may be a positive electrode.

According to the present disclosure, each of the positive electrode and the negative electrode includes a current collector, and an electrode active material layer formed on at least one surface of the current collector, wherein the electrode active material layer includes a plurality of electrode active material particles and may include a solid electrolyte as necessary. In addition, the electrodes may further include at least one of a conductive material and a binder resin as necessary. Further, the electrodes may further include various additives in order to supplement or improve the physicochemical properties of the electrode.

According to the present disclosure, any negative electrode active material may be used, as long as it can be sued as a negative electrode active material for a lithium ion secondary battery. Particular examples of the negative electrode active material include any one selected from: carbon, such as non-graphitizable carbon or graphitic carbon; metal composite oxides such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb or Ge; Me': Al, B, P, Si, an element of Group 1, Group 2 or Group 3 in the Periodic Table, or halogen; 0 < x ≤ 1; 1 ≤ y ≤ 3; 1 ≤ z ≤ 8); lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, or the like; conductive polymers such as polyacetylene; Li-Co-Ni based materials; titanium oxide; and lithium titanium oxide, or the like, or two or more selected therefrom. Particularly, the negative electrode active material may include a carbonaceous material and/or Si.

In the case of the positive electrode, any positive electrode active material may be used with no particular limitation, as long as it can be used as a positive electrode active material for a lithium ion secondary battery. Particular examples of the positive electrode active material include, but are not limited to: layered compounds such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1), or Li₂Mn₃MO₈ (wherein M is Fe, Co, Ni, Cu or Zn); lithium manganese composite oxides having a spinel structure and represented by the formula of LiNiₓMn₂₋ₓO₄; LiMn₂O₄ in which Li is partially substituted with an alkaline earth metal ion; disulfide compounds; disulfide compounds; Fe₂(MoO₄)₃; or the like.

According to the present disclosure, the current collector includes a metal plate having electrical conductivity and may be one selected suitably depending on polarity of electrodes known in the field of secondary batteries.

According to the present disclosure, the conductive material is added generally in an amount of 1-30 wt% based on the total weight of the mixture including the electrode active material. The conductive material is not particularly limited, as long as it causes no chemical change in the corresponding battery and has conductivity. For example, the conductive material include any one selected from: graphite, such as natural graphite or artificial graphite; carbon black, such as carbon black, acetylene black, Ketjen black, channel black, furnace black, lamp black or thermal black; conductive fibers, such as carbon fibers or metallic fibers; metal powder, such as carbon fluoride, aluminum or nickel powder; conductive whisker, such as zinc oxide or potassium titanate; conductive metal oxide, such as titanium oxide; and conductive materials, such as polyphenylene derivatives, or a mixture of two or more selected therefrom.

According to the present disclosure, the binder resin is not particularly limited, as long as it is an ingredient which assists binding of the electrode active material with the conductive material, and binding to the current collector. Particular examples of the binder resin include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer terpolymer (EPDM), sulfonated EPDM, styrene butadiene rubber, fluororubber, various copolymers, or the like. In general, the binder resin may be used in an amount of 1-30 wt%, or 1-10 wt%, based on 100 wt% of electrode active material layer.

Meanwhile, according to the present disclosure, each electrode active material layer may include at least one additive, such as an oxidation stabilizing additive, a reduction stabilizing additive, a flame retardant, a heat stabilizer, an anti-fogging agent, or the like, if necessary.

According to the present disclosure, the solid electrolyte may include at least one of a polymeric solid electrolyte, an oxide-based solid electrolyte and a sulfide-based solid electrolyte.

According to the present disclosure, each of the positive electrode and the negative electrode may use a different solid electrolyte, or the same solid electrolyte may be used for two or more battery elements. For example, in the case of a positive electrode, an electrolyte having high oxidation stability may be used as a solid electrolyte. **In** addition, in the case of a negative electrode, an electrolyte having high reduction stability may be used as a solid electrolyte. However, the scope of the present disclosure is not limited thereto. Since the solid electrolyte mainly functions to conduct lithium ions in the electrodes, any material having a high ion conductivity, such as 10⁻⁷ S/Cm or more, or 10⁻⁵ S/cm or more, may be used, and the solid electrolyte material is not limited to any specific ingredient.

According to the present disclosure, the polymer electrolyte may be a solid polymer electrolyte formed by adding a polymer resin to a lithium salt solvated independently, or may be a polymer gel electrolyte prepared by impregnating a polymer resin with an organic electrolyte containing an organic solvent and a lithium salt.

In still another aspect of the present disclosure, there is provided a secondary battery having the above-described structure. There are also provided a battery module including the secondary battery as a unit cell, a battery pack including the battery module, and a device including the battery pack as a power source. Herein, particular examples of the device may include, but are not limited to: power tools driven by an electric motor; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

In still another aspect of the present disclosure, there is provided a method for manufacturing a lithium secondary battery according to any one of the following embodiments. FIGS. 3a-3c is a schematic view illustrating the method.

First, a dispersion including a plurality of solid polymer particles and a liquid electrolyte is prepared (S1), as shown in FIG. 3a. Herein, solid polymer particle powder may be used as the solid polymer particles. In a variant, a dispersion including a plurality of solid polymer particles dispersed in a liquid electrolyte may be used. Herein, reference will be made to the above description about the solid polymer particles. Herein, the solvent cannot dissolve the solid polymer particles but can disperse the solid polymer particles therein. For example, the solvent may be ethanol, methanol, or the like.

Meanwhile, the content of the liquid electrolyte is 50-70 wt% based on 100 wt% of the total weight of the solid polymer particles and the liquid electrolyte. Particularly, the content of the liquid electrolyte may be 50 wt% or more, 55 wt% or more, or 60 wt% or more, based on the total weight of the solid polymer particles and the liquid electrolyte. In addition, the content of the liquid electrolyte may be 70 wt% or less, 68 wt% or less, or 65 wt% or less, based on the total weight of the solid polymer particles and the liquid electrolyte. Since such a high content of liquid electrolyte is used, it is possible to improve the ion conductivity of the solid-liquid hybrid electrolyte membrane.

According to an embodiment of the present disclosure, the dispersion in step (S1) may further include a separate solvent for the purpose of dispersion. Non-limiting examples of the solvent may include acetone, tetrahydrofuran, methylene chloride, or the like, but are not limited thereto.

Next, the dispersion is applied onto the first electrode to form a porous structural layer (S2). Herein, the first electrode may be a positive electrode or a negative electrode, and the second electrode described hereinafter is an electrode having a polarity opposite to the polarity of the first electrode and may be a negative electrode or a positive electrode.

Herein, the dispersion may be applied through any method used conventionally in the art, as shown in FIG. 3b. Referring to FIG. 3b, in order to apply the polymer particles homogeneously onto a nonwoven web substrate 11, the polymer particles may be dispersed in the liquid electrolyte, and then the dispersion may be coated on the nonwoven web substrate. In this case, the solid polymer particles may form a porous structural layer through a pressurization step. Herein, the solid polymer particles may be bound with one another under pressurization or heating, and thus a separate binder polymer is not required.

In addition, according to the present disclosure, any separate drying step is not required for forming a porous structural layer.

The present disclosure is directed to providing a solid-liquid hybrid electrolyte membrane with increased ion conductivity by using a high content of liquid electrolyte. To solve the problems related with mechanical strength, maintenance of the shape of a structure and processing, caused by the use of a high content of liquid electrolyte, the nonwoven web substrate is stacked right after the dispersion is applied onto the electrode according to the present disclosure. Therefore, there is no leakage of the liquid electrolyte and a solid-liquid hybrid electrolyte membrane capable of solving the above-mentioned problems can be obtained. In other words, according to an embodiment of the present disclosure, the method includes a step of stacking a nonwoven web substrate instead of a separate drying step in order to retain a high content of liquid electrolyte.

Next, a nonwoven web substrate and a second electrode having a polarity opposite to the polarity of the first electrode are stacked successively on the porous structural layer, and pressurization is carried out to obtain a solid-liquid hybrid electrolyte membrane including a nonwoven web substrate layer (S3).

Particularly, step (S3) is a step of applying the nonwoven web substrate on the porous structural layer, and then pressurizing the electrode assembly including the first electrode, porous structural layer, nonwoven web substrate and the second electrode, stacked successively. In this manner, it is possible to form a nonwoven web substrate layer in which the solid polymer particles are dispersed inside of a microporous structure in the nonwoven web substrate or the liquid electrolyte is incorporated into the microporous structure.

Herein, the pressurization step may be carried out once or many times with a predetermined interval in order to control the thickness and porosity of the porous substrate layer and/or solid-liquid hybrid electrolyte membrane.

It is possible to obtain a lithium secondary battery provided with a solid-liquid hybrid electrolyte membrane including a porous structural layer and a nonwoven web substrate layer through the above-described method.

According to an embodiment of the present disclosure, the first electrode may be a positive electrode and the second electrode may be a negative electrode, or the first electrode may be a negative electrode and the second electrode may be a positive electrode.

In addition, the nonwoven web substrate layer may have a microporous structure formed by the microstructure of the polymer fibrils, and the solid polymer particles may be dispersed in the microporous structure or the liquid electrolyte may be incorporated into the microporous structure.

According to an embodiment of the present disclosure, the solid polymer particles may be packed in the porous structural layer, while being in contact with one another, a pore structure may be formed between the solid polymer particles, and the liquid electrolyte may surround the portions in which the solid polymer particles are in surface contact with one another, or the surfaces of the solid polymer particles;

Herein, the nonwoven web substrate layer may include a nonwoven web substrate including any one selected from the group consisting of polyolefin, polyethylene terephthalate (PET), polyethylene naphthalene (PEN), polyester, nylon, polyimide, polybenzoxazole, polytetrafluoroethylene, polyarylene ether sulfone, polyether ether ketone and copolymers thereof, or a mixture of two or more selected therefrom.

The solid polymer particle may be an engineering plastic resin. Reference will be made to the above description about the solid polymer particles.

The liquid electrolyte may be a salt having a structure of A⁺B⁻, wherein A⁺ includes an alkali metal cation or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof. However, the scope of the present disclosure is not limited thereto.

Each of the first electrode and the second electrode may independently include a solid electrolyte or may include no solid electrolyte.

The porous structural layer may be coated and formed independently and directly on each of the first electrode and the second electrode.

In the method for manufacturing a lithium secondary battery according to an embodiment of the present disclosure, the dispersion is applied directly onto the electrode, as mentioned above. The dispersion includes the solid polymer particles and the liquid electrolyte, wherein the content of the liquid electrolyte is the same as or is larger than the content of the solid polymer particles. Meanwhile, when forming a separate free-standing separator by using a dispersion, the liquid electrolyte contained in the separator may be leaked, or such a high content of liquid electrolyte makes it difficult to maintain the mechanical strength. In addition, when coating the dispersion directly on the nonwoven web substrate, the pores of the nonwoven web substrate are too large to allow impregnation with the liquid electrolyte, resulting in loss of the liquid electrolyte. On the contrary, according to an embodiment of the present disclosure, since the dispersion is applied and dried directly on the electrode, it is possible to ensure sufficient ion conductivity, to inhibit a short-circuit and to increase the mechanical strength.

The examples and test examples will now be described. The following examples are for illustrative purposes only and not intended to limit the scope of this disclosure.

### Example 1

First, LiNi_{0.8}Co_{0.1}Mn_{0.1}O₂ (NCM811) as a positive electrode active material, vapor grown carbon fibers (VGCF) as a conductive material and a polymeric solid electrolyte (PEO+LiTFSI, molar ratio of [EO]/[Li⁺] of 18/1) were mixed at a weight ratio of 80:3:17 to prepare slurry for forming a positive electrode. The slurry was applied to an aluminum current collector having a thickness of 20 µm by using a doctor blade, and the resultant product was vacuum dried at 120°C for 4 hours. Then, the vacuum dried product was pressed by using a roll press to obtain a positive electrode having a positive electrode slurry loading amount of 3 mAh/cm² and a porosity of 22%.

Meanwhile, powder-type polyphenylene sulfide (average particle diameter: 10 µm) as a solid polymer particle was dispersed in a liquid electrolyte (ethylene carbonate : ethyl methyl carbonate = 3 : 7 (vol%), LiPF₆ 1 M, vinylene carbonate 0.5 vol%, fluoroethylene carbonate 1 vol%) at a weight ratio of 50:50 to prepare a dispersion.

Then, 3 mL of the dispersion was applied onto the positive electrode by using a doctor blade, and then pressurized to form a porous structural layer. The porous structural layer had a thickness of about 94 µm. After that, a PET nonwoven web substrate (porosity 78%) having a thickness of 40 µm was stacked on the porous structural layer, and the resultant structure was cut into a circular shape with a size of 1.4875 cm². Then, lithium metal used as a negative electrode was stacked in such a manner that it might face the nonwoven web substrate, and lamination was carried out at room temperature with a controlled roll pressing gap to obtain a solid-state battery including the porous structural layer and the nonwoven web substrate layer.

The solid-liquid hybrid electrolyte layer including the nonwoven web substrate layer had a thickness of 58 µm.

### Example 2

A solid-state battery was obtained in the same manner as Example 1, except that the weight ratio of the solid polymer particles to the liquid electrolyte was controlled to 30:70, the thickness of the porous structural layer was controlled to 81 µm, and the solid-liquid hybrid electrolyte membrane including the nonwoven web substrate after lamination had a thickness of 50 µm.

### Example 3

A solid-state battery was obtained in the same manner as Example 1, except that the weight ratio of the solid polymer particles to the liquid electrolyte was controlled to 30:70, the thickness of the porous structural layer was controlled to 77 µm, and the solid-liquid hybrid electrolyte membrane including a nonwoven web substrate layer (porosity: 58%) having a thickness of 20 µm after lamination had a thickness of 43 µm.

### Example 4

First, artificial graphite as a negative electrode active material, vapor grown carbon fibers (VGCF) as a conductive material and a polymeric solid electrolyte (PEO+LiTFSI, molar ratio of [EO]/[Li⁺] of 18/1) were mixed at a weight ratio of 90:2:8 to prepare slurry for forming a negative electrode. The slurry was applied to a copper current collector having a thickness of 15 µm by using a doctor blade, and the resultant product was vacuum dried at 100°C for 6 hours. Then, the vacuum dried product was pressed by using a roll press to obtain a negative electrode having a negative electrode slurry loading amount of 3.3 mAh/cm² and a porosity of 25%.

Meanwhile, powder-type polyphenylene sulfide (average particle diameter: 10 µm) as a solid polymer particle was dispersed in a liquid electrolyte (ethylene carbonate : ethyl methyl carbonate = 3 : 7 (vol%), LiPF₆ 1 M, vinylene carbonate 0.5 vol%, fluoroethylene carbonate 1 vol%) at a weight ratio of 30:70 to prepare a dispersion.

Then, 3 mL of the dispersion was applied onto the negative electrode by using a doctor blade, and then pressurized to form a porous structural layer. The porous structural layer had a thickness of about 82 µm. After that, a PET nonwoven web substrate (porosity 78%) having a thickness of 40 µm was stacked on the porous structural layer, and the resultant structure was cut into a circular shape with a size of 1.4875 cm². Then, lithium metal used as a counter electrode was stacked in such a manner that it might face the nonwoven web substrate, and lamination was carried out at room temperature with a controlled roll pressing gap to obtain a solid-state battery including the porous structural layer and the nonwoven web substrate layer.

The solid-liquid hybrid electrolyte layer including the nonwoven web substrate layer had a thickness of 52 µm.

### Example 5

A lithium ion battery was obtained as follows.

First, LiNi_{0.8}Co_{0.1}Mn_{0.1}O₂ (NCM811) as a positive electrode active material, vapor grown carbon fibers (VGCF) as a conductive material and polyvinylidene fluoride (PVDF) as a binder were mixed at a weight ratio of 95:3:2 to prepare positive electrode slurry. The slurry was applied to an aluminum current collector having a thickness of 20 µm by using a doctor blade, and the resultant product was vacuum dried at 120°C for 4 hours. Then, the vacuum dried product was pressed by using a roll press to obtain a positive electrode having a positive electrode slurry loading amount of 3 mAh/cm² and a porosity of 22%.

Meanwhile, powder-type polyphenylene sulfide (average particle diameter: 10 µm) as a solid polymer particle was dispersed in a liquid electrolyte (ethylene carbonate : ethyl methyl carbonate = 3 : 7 (vol%), LiPF₆ 1 M, vinylene carbonate 0.5 vol%, fluoroethylene carbonate 1 vol%) at a weight ratio of 30:70 to prepare a dispersion.

Then, 3 mL of the dispersion was applied onto the positive electrode by using a doctor blade to form a porous structural layer. The porous structural layer had a thickness of about 94 µm. After that, a PET nonwoven web substrate (porosity 78%) having a thickness of 40 µm was stacked on the porous structural layer, and the resultant structure was cut into a circular shape with a size of 1.4875 cm². Then, lithium metal used as a negative electrode was stacked in such a manner that it might face the nonwoven web substrate, and lamination was carried out at room temperature with a controlled roll pressing gap to obtain a lithium ion battery including the porous structural layer and the nonwoven web substrate layer.

The solid-liquid hybrid electrolyte layer including the nonwoven web substrate layer had a thickness of 58 µm.

### Comparative Example 1

Before manufacturing a solid-state battery, a solid-liquid hybrid electrolyte membrane was obtained by the following method. However, the resultant solid-liquid electrolyte membrane had insufficient strength, was not provided with a structure as a membrane, and thus could not be removed from a release film.

Powder-type polyphenylene sulfide (average particle diameter: 10 µm) as a solid polymer particle was dispersed in a liquid electrolyte (ethylene carbonate : ethyl methyl carbonate = 3 : 7 (vol%), LiPF₆ 1 M, vinylene carbonate 0.5 vol%, fluoroethylene carbonate 1 vol%) at a weight ratio of 30:70 to prepare a dispersion.

Then, 3 mL of the dispersion was applied onto a release film, not an electrode, by using a doctor blade to obtain a solid-liquid hybrid electrolyte membrane. However, the solid-liquid electrolyte membrane obtained after the coating had insufficient strength, was not provided with a structure as a membrane, and thus could not be removed from the release film.

### Comparative Example 2

Before manufacturing a solid-state battery, a solid-liquid hybrid electrolyte membrane was obtained by the following method. However, the pores of the non-woven web substrate had an excessively large size, and thus the solid polymer particles passed through the pores in the nonwoven web substrate and transferred to the other surface of the nonwoven web substrate, or the surface showed excessively high roughness, thereby making it difficult to manufacture an electrolyte membrane.

In the case of Comparative Example 2, the solid-liquid hybrid electrolyte membrane was obtained in the same manner as Example 2, except that the porous structural layer was applied directly onto the nonwoven web, not an electrode.

Particularly, 3 mL of the dispersion was applied onto a PET nonwoven web substrate (porosity 78%) having a thickness of 40 µm by using a doctor blade.

In the case of Comparative Example 2, the pores of the non-woven web substrate had an excessively large size, and thus the solid polymer particles passed through the pores in the nonwoven web substrate and transferred to the other surface of the nonwoven web substrate, or the surface showed excessively high roughness, thereby making it difficult to manufacture an electrolyte membrane.

### Comparative Example 3

A solid-liquid hybrid electrolyte membrane was obtained in the same manner as Example 2, except that the nonwoven web substrate was not used.

Particularly, 3 mL of the dispersion was applied onto the positive electrode by using a doctor blade. Herein, the resultant porous structural layer had a thickness of about 74 µm. After that, the porous structural layer was interposed between the positive electrode and lithium metal as a negative electrode, and lamination was carried out at room temperature with a controlled roll pressing gap to obtain a solid-state battery. The porous structural layer interposed between the electrodes had a thickness of 42 µm.

### Comparative Example 4

A solid-liquid hybrid electrolyte membrane was obtained in the same manner as Example 2, except that a polyolefin-based separator (thickness 9 µm, porosity 43%, pore size 200 nm) was used instead of the nonwoven web substrate in the manufacture of the solid-liquid hybrid electrolyte membrane.

**[Table 1]**

| | Weight ratio of solid polymer particles : liquid electrol yte | Presence of nonwove n web substrate | Manufacturabi lity | Thickne ss of porous structur al layer (µm) | Thickness of solid-liquid hybrid electrolyte membrane including nonwoven web substrate layer after lamination (µm) | Ion conducti vity of solid-liquid hybrid electrolyt e membran e (S/cm) | Positive electrode coin cell (measure d at 4.25V), but negative electrode coin cell in the case of Ex. 4 | Remarks |
|---|---|---|---|---|---|---|---|---|
| Ex. 1 | 50:50 | O | O | 94 | 58 | 8.52x10⁻⁴ | 201 | - |
| Ex. 2 | 30:70 | O | O | 81 | 50 | 9.26x10⁻⁴ | 203 | Content ratio of solid polymer particles : liquid electroly te is controlle d |
| Ex. 3 | 30:70 | O | O | 77 | 43 | 8.13x10⁻⁴ | 203 | Different type of nonwove n web substrate is used |
| Ex. 4 | 30:70 | O | O | 82 | 52 | 9.26x10⁻⁴ | 332 | Coated on negative electrode |
| Ex. 5 | 30:70 | O | O | 78 | 44 | 9.26x10⁻⁴ | 195 | Lithium ion battery, not |
| | | | | | | | | solid-state battery |
| Comp . Ex. 1 | 30:70 | X | X | - | - | - | - | Applied on release film |
| Comp . Ex. 2 | 30:70 | O (porous structural layer is coated directly on nonwove n web substrate ) | X | - | - | - | - | Applied on nonwove n web substrate |
| Comp . Ex. 3 | 30:70 | X | O | 74 | 42 | (micro-short) | (micro-short) | Free of nonwove n web substrate |
| Comp . Ex. 4 | 30:70 | X | O | 81 | 55 | 1.60x10⁻⁵ | 178 | Polyolefi n-based porous separator is used instead of nonwove n web substrate |

As shown in Table 1, when a dispersion containing easily deformable solid polymer particles is used and is interposed together with a nonwoven web substrate between a positive electrode and a negative electrode, it is possible to ensure sufficient strength as a separator to reduce micro-short generation, while ensuring ion conductivity.

On the contrary, when a solid-liquid hybrid membrane is manufactured alone without using any nonwoven web substrate according to Comparative Example 1, it is difficult to obtain a solid-liquid hybrid electrolyte membrane.

In addition, even when a porous structural layer is formed directly on an electrode, Comparative Example 3 including no nonwoven web substrate layer causes a micro-short, and it is difficult to obtain a battery.

When the dispersion is coated directly on a nonwoven web substrate according to Comparative Example 2, the solid polymer particles or the liquid electrolyte passes through the pores in the nonwoven web substrate due to the large size of the pores of the nonwoven web substrate. As a result, the solid polymer particles are transferred to the other surface of the nonwoven web substrate, or the surface shows excessively high roughness, thereby making it difficult to obtain an electrolyte membrane.

Further, when using a conventional polyolefin-based separator, not a nonwoven web substrate, according to Comparative Example 4, the porosity or pore size of the polyolefin-based separator is excessively small to form a structure different from the structure formed between the solid polymer particles and the nonwoven web substrate, and degradation of performance occurs due to such small pores.

### [Description of Drawing Numerals]

100: Solid-liquid hybrid electrolyte membrane
110: Nonwoven web substrate layer
120: Porous structural layer
11: Polymer fibrils
12: Solid polymer particles
13: Liquid electrolyte
200: Solid-state battery
210: Positive electrode
220: Negative electrode
230: Solid-liquid hybrid electrolyte membrane
231: Nonwoven web substrate layer
232: Porous structural layer
21: Polymer fibrils
22: Solid polymer particles
23: Liquid electrolyte

## Claims

1. A lithium secondary battery manufactured according to the method of claim 11,
which comprises a first electrode and a second electrode having a polarity opposite to each other, and a solid-liquid hybrid electrolyte membrane interposed between the first electrode and the second electrode,
wherein the solid-liquid hybrid electrolyte membrane comprises a non-woven web substrate layer and a porous structural layer formed on at least one surface of the non-woven web substrate, and the non-woven web substrate layer has a microporous structure formed by a microstructure of polymer fibrils, and solid polymer particles are dispersed in the microporous structure and a liquid electrolyte is incorporated into the microporous structure;
the solid polymer particles are packed in the porous structural layer, while being in contact with one another, a pore structure is formed between the solid polymer particles, and the liquid electrolyte surrounds the portions in which the solid polymer particles are in surface contact with one another, or the surfaces of the solid polymer particles;
the content of the liquid electrolyte is 50-70 wt% based on 100 wt% of the total weight of the solid polymer particles and the liquid electrolyte;
the solid-liquid hybrid electrolyte membrane has an ion conductivity of 1x10⁻⁵ to 1x10⁻¹ S/cm;
wherein the solid polymer particle comprises any one selected from the group consisting of polyphenylene oxide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more selected therefrom.

2. The lithium secondary battery according to claim 1, wherein the polymer fibrils have an average diameter of 0.005-5 µm, and the non-woven web substrate has pores having a diameter of 0.05-30 µm and a porosity of 50-80% as determined by using porosimetry.

3. The lithium secondary battery according to claim 1, wherein the polymer fibrils comprise any one selected from the group consisting of polyolefin, polyethylene terephthalate (PET), polyethylene naphthalene (PEN), polyester, nylon, polyimide, polybenzoxazole, polytetrafluoroethylene, polyarylene ether sulfone, polyether ether ketone and copolymers thereof, or a mixture of two or more selected therefrom.

4. The lithium secondary battery according to claim 1, wherein the solid polymer particle is an engineering plastic resin.

5. The lithium secondary battery according to claim 1, wherein the non-woven web substrate layer has a thickness of 5-100 µm, and the porous structural layer has a thickness of 5-500 µm.

6. The lithium secondary battery according to claim 1, wherein the first electrode and the second electrode comprise a solid electrolyte, and the solid-liquid hybrid electrolyte membrane has a thickness of 10-50 µm.

7. The lithium secondary battery according to claim 1, wherein the solid-liquid hybrid electrolyte membrane has a thickness of 5-500 µm.

8. The lithium secondary battery according to claim 1, which is a lithium ion secondary battery or a solid-state battery.

9. The lithium secondary battery according to claim 1, wherein each of the first electrode and the second electrode independently comprises a solid electrolyte or comprises no solid electrolyte.

10. The lithium secondary battery according to claim 1, wherein the porous structural layer is coated and formed independently and directly on each of the first electrode and the second electrode.

11. A method for manufacturing a lithium secondary battery which includes a first electrode and a second electrode having a polarity opposite to each other, and a solid-liquid hybrid electrolyte membrane interposed between the first electrode and the second electrode, the method comprising the steps of:
step S1: preparing a dispersion containing solid polymer particles and a liquid electrolyte;
step S2: applying the dispersion onto the first electrode to form a porous structural layer; and
step S3: stacking a non-woven web substrate and the second electrode having a polarity opposite to the polarity of the first electrode, successively, on the porous structural layer, and carrying out pressurization to obtain a solid-liquid hybrid electrolyte comprising the non-woven web substrate layer,
wherein the content of the liquid electrolyte is 50-70 wt% based on 100 wt% of the total weight of the solid-liquid hybrid electrolyte membrane;
wherein the solid polymer particle comprises any one selected from the group consisting of polyphenylene oxide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more selected therefrom.

12. The method for manufacturing a lithium secondary battery according to claim 11, wherein the first electrode is a positive electrode and the second electrode is a negative electrode, or the first electrode is a negative electrode and the second electrode is a positive electrode.

13. The method for manufacturing a lithium secondary battery according to claim 11, wherein the non-woven web substrate layer has a microporous structure formed by a microstructure of polymer fibrils, the solid polymer particles are dispersed in the microporous structure and the liquid electrolyte is incorporated into the microporous structure,
the solid polymer particles are packed in the porous structural layer, while being in contact with one another, a pore structure is formed between the solid polymer particles, and the liquid electrolyte surrounds the portions in which the solid polymer particles are in surface contact with one another, or the surfaces of the solid polymer particles.

## Patentansprüche

1. Lithium-Sekundärbatterie, hergestellt gemäß dem Verfahren nach Anspruch 11, die eine erste Elektrode und eine zweite Elektrode, die eine zueinander entgegengesetzte Polarität aufweisen, und eine Fest-Flüssig-Hybridelektrolytmembran, die zwischen der ersten Elektrode und der zweiten Elektrode angeordnet ist, umfasst,
wobei die Fest-Flüssig-Hybridelektrolytmembran eine Vliesbahnsubstratschicht und eine poröse Strukturschicht, die auf mindestens einer Oberfläche des Vliesbahnsubstrats gebildet ist, umfasst, und die Vliesbahnsubstratschicht eine mikroporöse Struktur aufweist, die durch eine Mikrostruktur von Polymerfibrillen gebildet ist, und feste Polymerpartikel in der mikroporösen Struktur dispergiert sind und ein flüssiger Elektrolyt in die mikroporöse Struktur eingebaut ist;
die festen Polymerpartikel in der porösen Strukturschicht gepackt sind, während sie miteinander in Kontakt stehen, eine Porenstruktur zwischen den festen Polymerpartikeln gebildet ist und der flüssige Elektrolyt die Abschnitte, in denen die festen Polymerpartikel miteinander in Oberflächenkontakt stehen, oder die Oberflächen der festen Polymerpartikel umgibt;
der Gehalt des flüssigen Elektrolyten 50-70 Gew.-%, bezogen auf 100 Gew.-% des Gesamtgewichts der festen Polymerpartikel und des flüssigen Elektrolyten, beträgt;
die Fest-Flüssig-Hybridelektrolytmembran eine Ionenleitfähigkeit von 1x10⁻⁵ bis 1x10⁻¹ S/cm aufweist;
wobei das feste Polymerpartikel eines, ausgewählt aus der Gruppe, bestehend aus Polyphenylenoxid, Polyetheretherketon, Polyimid, Polyamidimid, Flüssigkristallpolymer, Polyetherimid, Polysulfon, Polyarylat, Polyethylenterephthalat, Polybutylenterephthalat, Polyoxymethylen, Polycarbonat, Polypropylen, Polyethylen und Polymethylmethacrylat, oder zwei oder mehr davon, umfasst.

2. Lithium-Sekundärbatterie nach Anspruch 1, wobei die Polymerfibrillen einen durchschnittlichen Durchmesser von 0,005-5 µm aufweisen und das Vliesbahnsubstrat Poren mit einem Durchmesser von 0,05-30 µm und einer Porosität von 50-80 %, wie unter Verwendung von Porosimetrie bestimmt, aufweist.

3. Lithium-Sekundärbatterie nach Anspruch 1, wobei die Polymerfibrillen eines, ausgewählt aus der Gruppe, bestehend aus Polyolefin, Polyethylenterephthalat (PET), Polyethylennaphthalin (PEN), Polyester, Nylon, Polyimid, Polybenzoxazol, Polytetrafluorethylen, Polyarylenethersulfon, Polyetheretherketon und Copolymeren davon, oder eine Mischung von zwei oder mehr davon, umfassen.

4. Lithium-Sekundärbatterie nach Anspruch 1, wobei das feste Polymerpartikel ein technisches Kunststoffharz ist.

5. Lithium-Sekundärbatterie nach Anspruch 1, wobei die Vliesbahnsubstratschicht eine Dicke von 5-100 µm aufweist und die poröse Strukturschicht eine Dicke von 5-500 µm aufweist.

6. Lithium-Sekundärbatterie nach Anspruch 1, wobei die erste Elektrode und die zweite Elektrode einen Festelektrolyten umfassen und die Fest-Flüssig-Hybridelektrolytmembran eine Dicke von 10-50 µm aufweist.

7. Lithium-Sekundärbatterie nach Anspruch 1, wobei die Fest-Flüssig-Hybridelektrolytmembran eine Dicke von 5-500 µm aufweist.

8. Lithium-Sekundärbatterie nach Anspruch 1, die eine Lithium-Ionen-Sekundärbatterie oder eine Festkörperbatterie ist.

9. Lithium-Sekundärbatterie nach Anspruch 1, wobei jede der ersten Elektrode und der zweiten Elektrode unabhängig einen Festelektrolyten umfasst oder keinen Festelektrolyten umfasst.

10. Lithium-Sekundärbatterie nach Anspruch 1, wobei die poröse Strukturschicht unabhängig und direkt auf jeder der ersten Elektrode und der zweiten Elektrode beschichtet und gebildet ist.

11. Verfahren zur Herstellung einer Lithium-Sekundärbatterie, die eine erste Elektrode und eine zweite Elektrode, die eine zueinander entgegengesetzte Polarität aufweisen, und eine Fest-Flüssig-Hybridelektrolytmembran, die zwischen der ersten Elektrode und der zweiten Elektrode angeordnet ist, umfasst, wobei das Verfahren die folgenden Schritte umfasst:
Schritt S1: Herstellen einer Dispersion, die feste Polymerpartikel und einen flüssigen Elektrolyten enthält;
Schritt S2: Aufbringen der Dispersion auf die erste Elektrode, um eine poröse Strukturschicht zu bilden; und
Schritt S3: aufeinanderfolgendes Stapeln eines Vliesbahnsubstrats und der zweiten Elektrode, die eine Polarität aufweist, die der Polarität der ersten Elektrode entgegengesetzt ist, auf der porösen Strukturschicht und Durchführen von Druckbeaufschlagung, um einen Fest-Flüssig-Hybridelektrolyten zu erhalten, der die Vliesbahnsubstratschicht umfasst,
wobei der Gehalt des flüssigen Elektrolyten 50-70 Gew.-%, bezogen auf 100 Gew.-% des Gesamtgewichts der Fest-Flüssig-Hybridelektrolytmembran, beträgt;
wobei das feste Polymerpartikel eines, ausgewählt aus der Gruppe, bestehend aus Polyphenylenoxid, Polyetheretherketon, Polyimid, Polyamidimid, Flüssigkristallpolymer, Polyetherimid, Polysulfon, Polyarylat, Polyethylenterephthalat, Polybutylenterephthalat, Polyoxymethylen, Polycarbonat, Polypropylen, Polyethylen und Polymethylmethacrylat, oder zwei oder mehr davon, umfasst.

12. Verfahren zur Herstellung einer Lithium-Sekundärbatterie nach Anspruch 11, wobei die erste Elektrode eine positive Elektrode ist und die zweite Elektrode eine negative Elektrode ist oder die erste Elektrode eine negative Elektrode ist und die zweite Elektrode eine positive Elektrode ist.

13. Verfahren zur Herstellung einer Lithium-Sekundärbatterie nach Anspruch 11, wobei die Vliesbahnsubstratschicht eine mikroporöse Struktur aufweist, die durch eine Mikrostruktur von Polymerfibrillen gebildet ist, die festen Polymerpartikel in der mikroporösen Struktur dispergiert sind und der flüssige Elektrolyt in die mikroporöse Struktur eingebaut ist,
die festen Polymerpartikel in der porösen Strukturschicht gepackt sind, während sie miteinander in Kontakt stehen, eine Porenstruktur zwischen den festen Polymerpartikeln gebildet ist und der flüssige Elektrolyt die Abschnitte, in denen die festen Polymerpartikel miteinander in Oberflächenkontakt stehen, oder die Oberflächen der festen Polymerpartikel umgibt.

## Revendications

1. Batterie rechargeable au lithium fabriquée selon le procédé de la revendication 11, laquelle comprend une première électrode et une deuxième électrode ayant une polarité opposée l'une à l'autre, et une membrane d'électrolyte hybride solide-liquide interposée entre la première électrode et la deuxième électrode,
dans laquelle la membrane d'électrolyte hybride solide-liquide comprend une couche de substrat en tissu non tissé et une couche structurale poreuse formée sur au moins une surface du substrat en tissu non tissé, et la couche de substrat en tissu non tissé a une structure microporeuse formée par une microstructure de fibrilles de polymère, et des particules de polymère solides sont dispersées dans la structure microporeuse et un électrolyte liquide est incorporé dans la structure microporeuse ;
les particules de polymère solides sont assemblées dans la couche structurale poreuse, tout en étant en contact les unes avec les autres, une structure de pores est formée entre les particules de polymère solides, et l'électrolyte solide entoure les parties dans lesquelles les particules de polymère solides sont en contact de surface les unes avec les autres, ou les surfaces des particules de polymère solides ;
la teneur de l'électrolyte solide est 50-70 % en poids sur la base de 100 % en poids du poids total des particules de polymère solides et de l'électrolyte solide ;
la membrane d'électrolyte hybride solide-liquide a une conductivité ionique de 1x10⁻⁵ à 1x10⁻¹ S/cm ;
dans laquelle la particule de polymère solide comprend un élément quelconque sélectionné dans le groupe constitué d'oxyde de polyphénylène, polyéther éther cétone, polyimide, polyamideimide, polymère à cristaux liquides, polyétherimide, polysulfone, polyarylate, polytéréphtalate d'éthylène, polytéréphtalate de butylène, polyoxyméthylène, polycarbonate, polypropylène, polyéthylène et polyméthacrylate de méthyle, ou deux ou plus éléments sélectionnés parmi ces derniers.

2. Batterie rechargeable au lithium selon la revendication 1, dans laquelle les fibrilles de polymère ont un diamètre moyen de 0,005-5 µm, et le substrat en tissu non tissé a des pores ayant un diamètre de 0,05-30 µm et une porosité de 50-80 %, déterminée en utilisant la porosimétrie.

3. Batterie rechargeable au lithium selon la revendication 1, dans laquelle les fibrilles de polymère comprennent un élément quelconque sélectionné dans le groupe constitué de polyoléfine, polytéréphtalate d'éthylène (PET), polynaphtalate d'éthylène (PEN), polyester, nylon, polyimide, polybenzoxazole, polytétrafluoroéthylène, polyarylène éther sulfone, polyéther éther cétone et des copolymères de ces derniers, ou un mélange de deux éléments ou plus, sélectionnés parmi ces derniers.

4. Batterie rechargeable au lithium selon la revendication 1, dans laquelle la particule de polymère solide est une résine plastique technique.

5. Batterie rechargeable au lithium selon la revendication 1, dans laquelle la couche de substrat en tissu non tissé a une épaisseur de 5-100 µm, et la couche structurale poreuse a une épaisseur de 5-500 µm.

6. Batterie rechargeable au lithium selon la revendication 1, dans laquelle la première électrode et la deuxième électrode comprennent un électrolyte solide, et la membrane d'électrolyte hybride solide-liquide a une épaisseur de 10-50 µm.

7. Batterie rechargeable au lithium selon la revendication 1, dans laquelle la membrane d'électrolyte hybride solide-liquide a une épaisseur de 5-500 µm.

8. Batterie rechargeable au lithium selon la revendication 1, laquelle est une batterie rechargeable au lithium ou une batterie tout-solide.

9. Batterie rechargeable au lithium selon la revendication 1, dans laquelle la première électrode et la deuxième électrode comprennent chacune indépendamment un électrolyte solide ou ne comprennent pas d'électrolyte solide.

10. Batterie rechargeable au lithium selon la revendication 1, dans laquelle la couche structurale poreuse est revêtue et formée indépendamment et directement sur la première électrode et sur la deuxième électrode.

11. Procédé de fabrication d'une batterie rechargeable au lithium qui inclut une première électrode et une deuxième électrode ayant une polarité opposée l'une à l'autre, et une membrane d'électrolyte hybride solide-liquide interposée entre la première électrode et la deuxième électrode, le procédé comprenant les étapes consistant à :
étape S1 : préparer une dispersion contenant des particules de polymère solides et un électrolyte liquide ;
étape S2 : appliquer la dispersion sur la première électrode pour former une couche structurale poreuse ; et
étape S3 : empiler un substrat en tissu non tissé et la deuxième électrode ayant une polarité opposé à la polarité de la première électrode, successivement, sur la couche structurale poreuse, et effectuer une pressurisation pour obtenir un électrolyte hybride solide-liquide comprenant la couche de substrat en tissu non tissé,
dans laquelle la teneur de l'électrolyte solide est 50-70 % en poids sur la base de 100 % en poids du poids total de la membrane d'électrolyte hybride solide-liquide ;
dans laquelle la particule de polymère solide comprend un élément quelconque sélectionné dans le groupe constitué d'oxyde de polyphénylène, polyéther éther cétone, polyimide, polyamideimide, polymère à cristaux liquides, polyétherimide, polysulfone, polyarylate, polytéréphtalate d'éthylène, polytéréphtalate de butylène, polyoxyméthylène, polycarbonate, polypropylène, polyéthylène et polyméthacrylate de méthyle, ou deux ou plus éléments sélectionnés parmi ces derniers.

12. Procédé de fabrication d'une batterie rechargeable au lithium selon la revendication 11, dans laquelle la première électrode est une électrode positive et la deuxième électrode est une électrode négative, ou la première électrode est une électrode négative et la deuxième électrode est une électrode positive.

13. Procédé de fabrication d'une batterie rechargeable au lithium selon la revendication 11, dans laquelle la couche de substrat en tissu non tissé a une structure microporeuse formée par une microstructure de fibrilles de polymère, les particules de polymère solides sont dispersées dans la structure microporeuse et l'électrolyte solide est incorporée dans la structure microporeuse,
les particules de polymère solides sont assemblées dans la couche structurale poreuse, tout en étant en contact les unes avec les autres, une structure de pores est formée entre les particules de polymère solides, et l'électrolyte solide entoure les parties dans lesquelles les particules de polymère solides sont en contact de surface les unes avec les autres, ou les surfaces des particules de polymère solides.
